# EUROPEAN PATENT APPLICATION

(11) **EP 4 418 032 A1**
(43) Date of publication of application: **21.08.2024**
(21) Application number: 24158505.8
(22) Date of filing: 20.02.2024
(51) Int. Cl.: G02B 27/00, B60S 1/56

(54) **SENSOR SYSTEM**

(30) Priority: 20.02.2023 US 202363485999 P; 12.02.2024 US 202418439581
(71) Applicant: Apple Inc., Cupertino, CA 95014 (US)
(72) Inventor: KAUFHOLD, Paul D., Cupertino, CA 95014 (US)
(74) Representative: Lang, Johannes

(57) **Abstract**

A sensor assembly can include a body defining an aperture and a lens disposed in the aperture. The lens can include an outer surface and an internal surface. The sensor assembly can further include a sensor disposed behind the lens adjacent to the internal surface, an air mover configured to move air across the outer surface, and a vibration mechanism mechanically coupled to the lens and configured to vibrate the lens.

## Description

### CROSS-REFERENCE TO RELATED APPLICATION(S)

This claims priority to U.S. Provisional Application No. 63/485,999, filed 20 February 2023, the entire disclosure of which is hereby incorporated by reference in its entirety.

### FIELD

The described embodiments relate generally to sensor systems. More particularly, the present embodiments relate to a vibration and air fluid mover of a sensor clearing system.

### BACKGROUND

Recent advances in the electronics industry have enabled products with automated systems that typically include various sensors. Sensors involved in functions for systems such as automated environmental conditioning systems and the like can become dirty or otherwise temporarily impaired due to environmental conditions. Typically, vision-based sensors incorporate a lens through which they receive inputs regarding environments, conditions, and the like, external to the product. As such, many vision-based sensors include at least one component, such as a lens, that is exposed to an external environment of the product. These components tend to come into contact with debris and weather conditions that can obstruct the field of vision and/or line of sight of the vision-based sensors. Thus, sensor clearing systems designed to clean components of sensors actively during use are needed.

### SUMMARY

In at least one example of the present disclosure, a vehicle sensor assembly includes a lens disposed in an aperture defined by a body of a vehicle, the lens including an outer surface and an internal surface. The vehicle sensor assembly further includes a sensor disposed behind the lens adjacent to the internal surface and a debris clearing assembly for removing debris from the outer surface. The debris clearing assembly can include an air mover and a vibration mechanism mechanically coupled to the lens.

In one example, an orientation of the sensor defines a line of sight through the lens in a direction substantially aligned with the optical axis of the lens. In one example, the vibration mechanism is configured to oscillate the lens in the direction. In one example, the outer surface defines a portion of an external surface of the vehicle body and the air mover is disposed in an internal volume defined by the vehicle body. In one example, the air mover includes a fan configured to move air from the internal volume to the outer surface. In one example, the vehicle sensor assembly further includes a sensor housing defining a channel configured to direct air moved by the fan. In one example, the air mover includes a vacuum pump configured to move air from beyond the external surface, over the outer surface, and into the internal volume. In one example, the vibration mechanism includes an electromagnetic linear actuator or a rotary mass vibration motor.

In at least one example of the present disclosure, a visual sensor system for a vehicle includes a sensor housing and a lens disposed in an aperture defined by a vehicle body, the body at least partially defining an external surface of the vehicle and the lens including an outer surface at least partially defining the external surface. The visual sensor system further includes a visual sensor disposed in the sensor housing, a channel defined by the sensor housing and configured to direct air tangentially across the outer surface of the lens, an air mover disposed within an internal volume defined by the vehicle body and configured to move air through the channel, and a vibration mechanism connected to the lens.

In one example, the vibration mechanism is configured to oscillate the lens in a plane parallel to a line of sight of the visual sensor. In one example, the vibration mechanism is configured to oscillate the lens in a plane perpendicular to a line of sight of the visual sensor. In one example, the vibration mechanism is configured to translate the lens back and forth about an axis perpendicular to a line of sight of the visual sensor. In one example, the sensor housing includes a sidewall, and the lens is secured to the sidewall. In one example, the vibration mechanism includes a plurality of actuators disposed between the sidewall and the lens. In one example, each of the plurality of actuators are spaced apart around a peripheral portion of the lens.

In at least one example of the present disclosure, a debris clearing assembly for a vehicle sensor assembly includes an air mover in fluid communication with an external surface of a lens, the lens at least partially defining an external surface of a vehicle, and a controller electrically coupled to a sensor and the air mover, the sensor disposed adjacent the lens. The controller configured to detect fluid on the lens in response to a signal received from the sensor and activate the air mover to move the air to remove the fluid from the lens.

In one example, the debris clearing assembly further includes a vibration mechanism mechanically connected to the lens. In one example, the controller is electrically coupled to the vibration mechanism, and the controller is configured to oscillate the lens via the vibration mechanism when the controller detects the fluid on the lens via the sensor. In one example, the sensor includes a visual sensor. In one example, the vehicle includes a body defining the external surface and an internal volume, and the air mover is disposed in the internal volume.

### BRIEF DESCRIPTION OF THE DRAWINGS

The disclosure will be readily understood by the following detailed description in conjunction with the accompanying drawings, wherein like reference numerals designate like structural elements, and in which:
FIG. 1 shows a perspective view of an example of a vehicle;
FIG. 2 shows an example of a vehicle sensor assembly;
FIG. 3 shows an example of a vehicle sensor assembly including an air channel;
FIG. 4 shows an example of a visual sensor system for a vehicle;
FIG. 5 shows an example of a debris clearing assembly for a vehicle sensor assembly;
FIG. 6 shows an example of a lens for a vehicle sensor assembly; and
FIG. 7 shows a schematic view of an example of a vehicle.

### DETAILED DESCRIPTION

The following description makes reference to various embodiments illustrated in the accompanying drawings, and are not intended to limit the examples to one preferred embodiment. Rather, they are included to describe alternatives, modifications, and equivalents as can be included within the spirit and scope of the described examples and the appended claims.

The following disclosure relates to sensor systems. More particularly, the present disclosure relates to a vibration and an air fluid mover of a sensor clearing system for a vehicle. Typical sensors for vehicles become dirty when exposed to an environment external to the vehicle. For example, vision-based sensors may incorporate a component that defines or is coupled to an external surface of the vehicle such that debris, including dust, water, and mud from various weather conditions contacts the component, which can potentially obstruct a field of vision of the vision-based sensors.

The present disclosure can clean or otherwise clear the sensor of debris. During operation of the vehicle, whether stationary or in motion, the various assemblies and systems described herein can oscillate the sensor or components thereof via vibration excitation to reduce the surface tension cohesion of fluids and the adhesion of fluids and debris to a lens of the sensor. With the reduction in cohesion and adhesion, the debris and/or fluid may fall off the lens, thus clearing the lens. The various assemblies and systems described herein can also move air over the surface of the lens that is exposed to the environment external to the vehicle. The air source can be from the environment external to the vehicle or from an internal compartment of the vehicle. The air flow rate can be sufficiently high to remove debris and/or fluid present on the lens.

In at least one example, a vehicle sensor assembly can include a lens disposed in an aperture of a vehicle with an outer surface of the lens exposed to an external environment. The vehicle sensor assembly can also include a vibration mechanism to vibrate the lens and an air mover to move air across the outer surface of the lens. In this way, the vibration mechanism can reduce the forces holding debris and/or fluid on the lens via oscillating the lens, while the air mover can clear the lens of the debris and/or fluid via moving air across the outer surface of the lens. Clearing the lens of debris and/or fluid can increase the efficiency of the sensor system by allowing the sensor of the system to receive more and/or clearer input data. For example, in a vision-based sensor, with the lens cleared of debris and/or fluid, the field of vision of the sensor may be such that visual input data is more clearly received since there are less or no obstructions.

In some examples, the vehicle can include a controller electrically coupled to the sensor to cause the sensor to detect when fluid, dust, or other debris has accumulated on the lens. Once detected, the vibration and directed air flow onto the lens can be instigated automatically. In this way, sensor assemblies and systems described herein can actively clear debris for enhanced sensor performance in real time and in reaction to variable environmental and operational conditions.

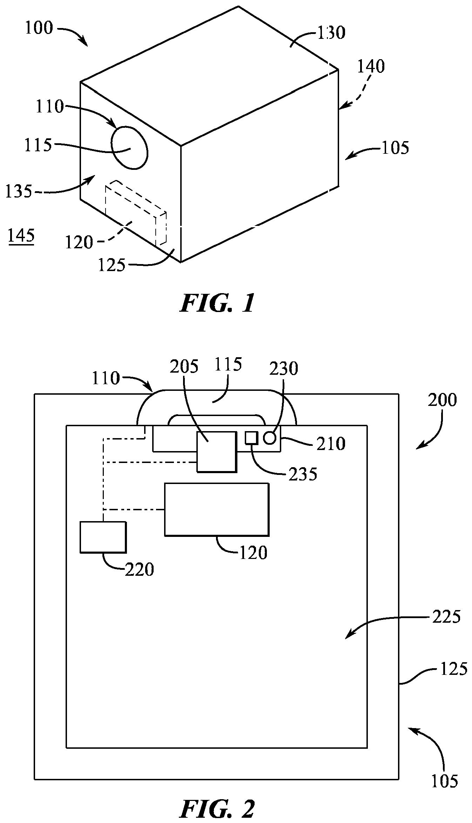

These and other embodiments are discussed below with reference to FIGS. 1-7. However, those skilled in the art will readily appreciate that the detailed description given herein with respect to these Figures is for explanatory purposes only and should not be construed as limiting. Furthermore, as used herein, a system, a method, an article, a component, a feature, or a sub-feature comprising at least one of a first option, a second option, or a third option should be understood as referring to a system, a method, an article, a component, a feature, or a sub-feature that can include one of each listed option (*e.g.,* only one of the first option, only one of the second option, or only one of the third option), multiple of a single listed option (*e*.*g*., two or more of the first option), two options simultaneously (*e*.*g*., one of the first option and one of the second option), or combination thereof (*e*.*g*., two of the first option and one of the second option).

FIG. 1 illustrates a perspective view of an example of a vehicle 100 including various structural elements. The vehicle 100 can be electric such that the vehicle 100 is battery powered. The vehicle 100 can include a vehicle body 105 defining an external surface 125. The vehicle body 105 can include a roof or a roof structure 130. The roof or roof structure 130 can refer to a top covering or portion of the vehicle 100 and can be formed of any number of materials and elements. The vehicle body 105 can define a front end or portion 135, and a rear end or portion 140. As used herein, the terms "structural," "structure," "structurally," and related terms refer to load bearing components and elements, or components and elements contributing to the physical form of an object, such as a vehicle. For example, the body of a vehicle can be formed of various structural elements adding to the form and shape of the vehicle, including load bearing elements such as load bearing structural beams, structural roof elements including load bearing or shape forming beams, plates, windows, sheets, and so forth.

The vehicle 100 can define at least one aperture 110. For example, the vehicle body 105 can define the aperture 110. In this example, the aperture 110 can be defined anywhere on the vehicle body 105. For example, the front end 135 or the rear end 140 may define the aperture 110. In another example, the front end 135 and the rear end 140 may each define an aperture 110. The aperture 110 may extend at least partially through the external surface 125 of the vehicle 100.

The vehicle 100 can include at least one lens 115. The lens 115 can be any shape. For example, the lens 115 can have a circular face, a square face, a rectangular face, or the like. The lens 115 can be flat or curved, e.g., the face of the lens 115 can have a curvature. The lens 115 can be integrated into the vehicle 100 such that the lens 115 is an integral component thereof. For example, the lens 115 can at least partially define the external surface 125 of the vehicle 100. The lens 115 can be coupled with the vehicle 100 or a component thereof. For example, the lens 115 can be mounted on the roof 130. In another example, the lens 115 can be disposed in the aperture 110. In this example, the lens 115 can be coupled with the aperture 110, e.g., magnetically, structurally snaps into the aperture 110, or the like. With the lens 115 disposed in the aperture 110, the aperture 110 may extend at least the thickness of the lens 115 through the external surface 125. In some examples, the lens can include a seal (not shown) that seals the area between the lens 115 and the external surface 125.

The lens 115 can be at least partially transparent such that light rays can penetrate through the lens 115. For example, light rays from an external environment 145 of the vehicle 100 can penetrate the lens 115 and enter a portion of the vehicle 100. Another component of the vehicle 100, e.g., disposed behind (in an operational orientation) the lens 115, can be configured to receive the lights rays from the external environment 145. Additionally, a component of the vehicle 100, e.g., disposed behind (in an operational orientation) the lens 115, can be configured to transmit lights rays to the external environment 145. The light rays can penetrate through the lens 115 and enter the external environment 145. In these examples and with the lens 115 disposed in the aperture 110, the aperture 110 may extend through the external surface 125 of the vehicle 100 by the thickness of the lens 115 plus the thickness of the component of the vehicle 100 that is configured to receive/transmit the light rays from/to the lens 115. The lens 115 can have a tint to filter a portion of light rays penetrating through the lens 115 and/ or the lens 115 can have a protective layer that may consequently block a portion of light rays penetrating through the lens 115.

The vehicle 100 can include at least one air mover 120. The air mover 120 can be integrated into the vehicle 100 or coupled with the vehicle 100. For example, the air mover 120 can be coupled with at least one component of the vehicle 100 as well as structurally mounted to or within an internal volume of the vehicle 100 or the vehicle body 105. The air mover 120 can be or can include a fan such as an axial fan, a blower, an air nozzle, or the like.

The air mover 120 can be configured to move a fluid, such as air. For example, the air mover 120 can push air, pull air, and/or recirculate air. The air the air mover 120 moves can have a variable temperature. For example, the temperature of the air can be greater than or equal to about 35 degrees Fahrenheit and less than or equal to about 90 degrees Fahrenheit. The air mover 120 can move air at a flow rate of greater than or equal to about 4 meters per second and less than or equal to about 10 meters per second. For example, the air mover 120 can move air at a flow rate of about 7 meters per second. The air mover 120 can move air across the lens 115. For example, the air mover 120 can move air at a temperature sufficient to de-ice and/or de-fog the lens 115. The air mover 120 can remove debris and/or fluid on or otherwise in contact with the lens 115 via the air the air mover 120 moves. With the debris and/or fluid removed from the lens 115, light rays can penetrate through the lens 115 more efficiently than if the debris and/or fluid were not removed.

Any of the features, components, and/or parts, including the arrangements and configurations thereof shown in FIG. 1 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 1.

FIG. 2 illustrates an example of a vehicle sensor assembly 200 for the vehicle 100. The vehicle sensor assembly 200 can include the vehicle body 105 defining the external surface 125 and the aperture 110, the lens 115 disposed in the aperture 110, and the air mover 120 can be in fluid communication with the lens 115 such that the air mover 120 is configured to move air across the lens 115, as described herein. The vehicle body 105 can further define an internal volume 225. For example, the vehicle body 105 can define the internal volume 225. Components of the vehicle 100 can be disposed in or otherwise in communication with the internal volume 225. For example, the air mover 120 can be disposed in the internal volume 225 defined by the vehicle body 105.

The vehicle 100 can include a sensor 205. For example, the vehicle sensor assembly 200 can include the sensor 205. The sensor 205 can be a part of a sensor assembly that includes the lens 115, e.g., the lens 115 can be a component of the sensor assembly. The sensor 205 can be disposed behind (in an operational orientation) the lens 115 or otherwise in communication with the light rays that penetrate through the lens 115. The sensor 205 can receive input data regarding the vehicle 100 and/or the external environment 145 of the vehicle 100. The sensor 205 can be a vision-based or visual sensor 205. For example, the sensor 205 can receive pictures, videos, light rays, or other visual data as the input data. In this example and with the sensor 205 disposed behind the lens 115, the input data can first penetrate through the lens 115 before the sensor 205 is configured to receive the input data. The sensor 205 can output data, e.g., to other components of the vehicle 100, as described herein.

The vehicle 100 can include a vibration mechanism 210. For example, the vehicle sensor assembly 200 can include the vibration mechanism 210. The vibration mechanism 210 can be external the vehicle 100 or coupled to the external surface 125 of the vehicle 100. For example, the vibration mechanism 210 can induce vibrations via an electromagnetic field. The vibration mechanism 210 can be integrated into the vehicle 100 or otherwise coupled with internal components of the vehicle 100. For example, the vibration mechanism 210 can be coupled to the lens 115 and/or to another component of the vehicle 100. The vibration mechanism 210 can be directly coupled with the vehicle 100 or components thereof, e.g., mechanically coupled via at least one screw.

The vibration mechanism 210 can oscillate or otherwise vibrate. The vibration source and/or oscillations can be variable. For example, the amplitude and frequency of the vibrations can vary. The vibration mechanism 210 can vibrate at any frequency greater than or equal to about 100 hertz and less than or equal to about 5000 hertz. The vibration mechanism 210 can vibrate on a 1:1 scale at any amplitude greater than or equal to about 0.1 and less than or equal to about 1. For example, the vibration mechanism 210 can vibrate at a lower frequency, e.g., about 300 hertz, with a higher amplitude, e.g., about 0.7. The vibration mechanism 210 can be or can include at least one electromagnetic linear actuator 230. Similarly, the vibration mechanism 210 can be or can include at least one rotary mass vibration motor 235.

The vibration mechanism 210 can induce oscillations and/or vibrations. For example, vibration mechanism 210 can oscillate or otherwise vibrate components to which the vibration mechanism 210 is coupled. For example, the vibration mechanism 210 can be mechanically coupled to the lens 115 and configured to vibrate the lens 115. With the vibration mechanism 210 configured to vibrate the lens 115, the vibrations can reduce the adhesion between the lens 115 and debris and/or fluid on the lens 115 as well as reduce cohesion of any fluid on the lens 115. With the reduction in forces holding fluid to the lens 115, the debris and/or fluid can fall off or otherwise be cleared from the lens 115. The vibration frequency and amplitude of the vibration mechanism 210 can range depending on the tension between the lens 115 and the debris and/or fluid on the lens 115, or on environmental conditions such as sleet that the lens 115 is exposed to. The vibration frequency and amplitude of the vibration mechanism 210 can also range depending on other components of the vehicle 100. For example, the vibration mechanism 210 can vibrate at a sufficient frequency and amplitude to clear the lens 115 from debris and/or fluid without the air mover 120 moving air over the lens 115. Additionally, the vibration mechanism 210 can vibrate at a lower frequency and amplitude with the air mover 120 moving air over the lens 115 than with the air mover 120 not operating, e.g., not moving air over the lens 115.

The vehicle 100 can include a fluid mover 220. More specifically, according to one example, the vehicle sensor assembly 200 can include the fluid mover 220. The fluid mover 220 can be similar to or the same as the air mover 120. For example, the fluid mover 220 can be coupled with or to components of the vehicle 100. The fluid that the fluid mover 220 moves, however, can be water, cleaning solution, and/or soap instead of air. For example, the fluid mover 220 can be in communication with a water and/or soap source and can be configured to move water and/or soap over the lens 115. The fluid mover 220 can be configured to clean the lens 115 via the water and/or soap. For example, the fluid mover 220 can clear the lens 115 of debris, such as mud.

Any of the features, components, and/or parts, including the arrangements and configurations thereof shown in FIG. 2 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 2.

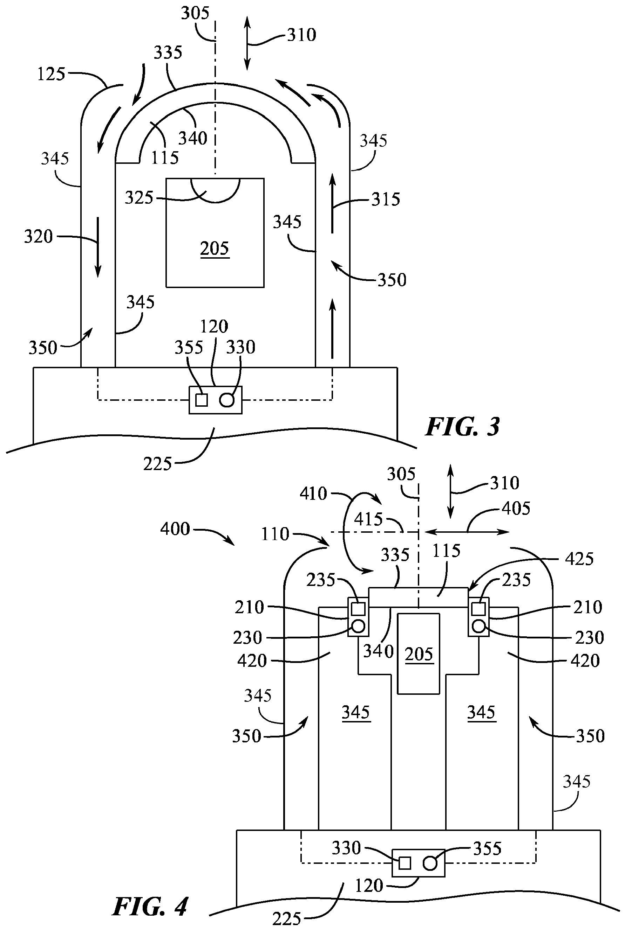

FIG. 3 illustrates an example of a channel 350 in the vehicle 100. For example, the vehicle sensor assembly 200 can define the channel 350. The channel 350 can be two or more channels 350 that are not connected or can be one continuous channel 350. The channel 350 can be defined by the vehicle 100 and/or components of the vehicle 100. The channel 350 can be or can define a pathway for fluid to flow through. For example, air moved by the air mover 120 can flow through the channel 350. For example, fluid moved by the fluid mover 220 can flow through the channel 350. The channel 350 and the lens 115 can be in fluid communication. For example, the channel 350 can direct fluid over and/or to the lens 115.

The air mover 120 can be in fluid communication with an air source. The air source can be from the external environment 145 of the vehicle 100 or from an internal environment of the vehicle 100. For example, the air mover 120 can pull air from the external environment 145 of the vehicle 100 in and over the lens 115. For example, the air mover 120 can push and/or recirculate air from the internal environment of the vehicle 100 over the lens 115. In another example, the air mover 120 may not provide air at all, e.g., the lens 115 can be positioned such that air contacts the lens 115 with the vehicle 100 in motion and removes debris and/or fluid present on the lens 115. Thus, in this example, with the vehicle 100 stationary the air mover 120 can provide an air source, and with the vehicle 100 in motion the air source may not be provided by the air mover 120.

The air mover 120 can push air, pull air, or push and pull air. The dotted lines connecting the air mover 120 to the channels 350 in FIG. 3 indicate a fluid connection or communication with the air mover 120 and the channels 350. The air mover 120 can move air in 320, e.g., towards the internal volume 225 through the channel 350. For example, the air mover 120 can move the air in 320 from outside the vehicle 100. For example, the air mover 120 can pull the air in 320 from the external environment 145 of the vehicle 100. The air mover 120 can move air out 315, e.g., towards the external environment 145 through the channel 350. For example, the air mover 120 can push the air out 315 to the external environment 145. The air mover 120 can recirculate air, e.g., push and pull air. For example, with two channels 350 in fluid communication, the air mover 120 can push air out 315 of one channel 350 and pull air in 320 to the other channel 350.

The air mover 120 can be or can include a fan 330. The fan 330 can be configured to move air, e.g., push air through the channel 350. For example, the fan 330 can move the air out 315 from the internal volume 225 to the lens 115. The air mover 120 can be or can include a vacuum pump 355. The vacuum pump 355 can be configured to move air, e.g., pull air through the channel 350. For example, the vacuum pump 355 move the air in 320 from the external environment 145 and/or the lens 115. For example, the air mover 120 can include the vacuum pump 355 configured to move the air from beyond the external surface 125, over the lens 115, and into the internal volume 225.

The lens 115 can include or define an outer surface 335 and an internal surface 340. The outer surface 335 can define the external surface 125 of the vehicle body 105. For example, in an operational orientation, the external surface 125 can be defined by the outer surface 335 of the lens 115. The air mover 120 can be in fluid communication with the lens 115 at the external surface 335 such that the air mover 120 is configured to move air across the outer surface 335. For example, the air mover 120 can push air through the channel 350 that directs the air over the outer surface 335 of the lens 115. For example, the air mover 120 can include the vacuum pump 355 configured to move the air from beyond the external surface 125, over the outer surface 335, and into the internal volume 225. In this way, the outer surface 335 of the lens 115 can be cleared of debris and/or fluid. The sensor 205 can be disposed behind (in an operational orientation) the lens 115 adjacent to the internal surface 340. Thus, with the outer surface 335 of the lens 115 at least partially cleared of debris and/or fluid, the input data can penetrate through the lens 115 from the outer surface 335 to the internal surface 340 such that the sensor 205 can receive the input data.

An orientation of the sensor 205 can determine or influence a line of sight 305 in a direction 310 in a plane. For example, the line of sight 305 can be a central line of sight 305 of the sensor 205. The line of sight 305 can be the angle in which the sensor 205 is positioned. In one example, the line of sight 305 can be substantially aligned with the optical axis of a lens associated with the sensor 204. In some examples, the optical axis of the lens, and therefore the line of sight 305, can be centered on a cone angle that defines a field of view of the sensor 205. In some examples, the line of sight 305 can be parallel to the optical axis. The direction 310 can be parallel to the central line of sight 305, or the optical axis of a lens of the sensor 205. The vibration mechanism 210 can vibrate in a direction substantially parallel to or along the line of sight 305. For example, the vibration mechanism 210 is configured to oscillate the lens 115 back and forth in the direction 310. By oscillating the lens 115 along the direction 310 or plane, the lens 115 can be curved, domed, flat, or the like.

The sensor 205 can be or can include a camera 325. For example, the sensor 205 can receive an image or video as input data, capture the image or video via the camera 325, and transmit the image or video to another vehicle component. The sensor 205 can be a light detection and ranging or laser imaging, detection, and ranging ("LIDAR") sensor 205. Alternatively, the sensor 205 can include or be in communication with a LIDAR system. In these examples, the sensor 205 can be configured to transmit light, such as a laser beam, and receive a reflection of the light as the input data.

The vehicle 100 can include a sensor housing 345. The sensor housing 345 can house the sensor 205. For example, the sensor housing 345 can receive the sensor 205. Surfaces of the sensor housing 345 can define pathways in the vehicle 100 and/or components of the vehicle 100. For example, the sensor housing 345 can define the channel 350 configured to direct the air moved by the fan 330. For example, the air mover 120 can include the fan 330 configured to move the air from the internal volume 225 to the outer surface 335 of the lens 115, e.g., through the channel 350 defined by the sensor housing 345. Components of the vehicle 100 can be coupled with or to the sensor housing 345. For example, the sensor housing 345 and/or surfaces thereof can be in fluid communication with the air mover 120 and/or the fluid mover 220. In an additional example, the vibration mechanism 210 and the lens 115 can be directly or indirectly coupled to the sensor housing 345. In this example, the vibration mechanism 210 can vibrate the sensor housing 345, the sensor 205, and the lens 115. For example, the sensor housing 345 can be directly coupled with the lens 115. The transition between the lens 115 and the sensor housing 345 can be gradual e.g., curved. With a gradually curved transition, the debris and/or fluid can more efficiently (e.g., compared to a blunt transition) be cleared from the lens 115 since the surface tension is less on a curve than a flat surface.

Any of the features, components, and/or parts, including the arrangements and configurations thereof shown in FIG. 3 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 3.

FIG. 4 illustrates an example of a visual sensor system 400 for the vehicle 100. The visual sensor system 400 can include the vehicle body 105 defining the aperture 110 and the external surface 125 of the vehicle 100.

The visual sensor system 400 can include the sensor housing 345 including the lens 115 disposed in the aperture 110. The lens 115 can include the outer surface 335 defining the external surface 125 of the vehicle 100. The sensor housing 345 can include a sidewall 420. At least one surface of the sidewall 420 can define the channel 350. Components of the vehicle 100 can be coupled with the sidewall 420. For example, the lens 115 can be directly or indirectly secured to the sidewall 420. For example, the lens 115 can be secured to the sidewall 420 of the sensor housing 345 with the vibration mechanism 210 disposed between. The transition between the lens 115 and the sensor housing 345 can be gradual e.g., curved. With a gradually curved transition, the debris and/or fluid can more efficiently (e.g., compared to a blunt transition) be cleared from the lens 115 since the surface tension is less on a curve than a flat surface.

The vibration mechanism 210 can include a plurality of actuators 230, e.g., the electromagnetic linear actuators 230, disposed between the sidewall 420 and the lens 115. The plurality of actuators 230 can be spaced apart around a peripheral portion 425 of the lens 115. For example, the plurality of actuators 230 can be a ring of actuators 230 disposed between the lens 115 and the sensor housing 345 to move the lens 115 up and down (in an operational orientation). For example, the vibration mechanism 210 can oscillate a ring of actuators 230 to rotate about a center point of the lens 115.

The visual sensor system 400 can include the visual sensor 205 disposed in the sensor housing 345, the channel 350 defined by the sensor housing 345 and configured to direct air tangentially across the outer surface 335 of the lens 115, and the air mover 120 disposed within the internal volume 225 defined by the vehicle body 105 and configured to move the air through the channel 350.

The visual sensor system 400 can include the vibration mechanism 210 coupled to the lens 115. The vibration mechanism 210 can oscillate the lens 115 in at least one direction, e.g., translate the lens 115 in various directions, and/or pivot/tip the lens 115 in at least one direction, e.g., various directions. For example, the vibration mechanism 210 can be configured to oscillate the lens 115 back and forth in the direction 310 in a plane parallel to the central line of sight 305 of the visual sensor 205. For example, the vibration mechanism 210 can be configured to oscillate the lens 115 back and forth in a direction 405 perpendicular to the central line of sight 305 of the visual sensor 205. For example, with the lens 115 flat, the light rays transmitted/received will not be refracted or otherwise distorted with the lens 115 oscillated in the direction 405. For example, the vibration mechanism 210 can be configured to translate the lens 115 in a direction 410 back and forth about an axis 415 perpendicular to the central line of sight 305 of the visual sensor 205.

Any of the features, components, and/or parts, including the arrangements and configurations thereof shown in FIG. 4 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 4.

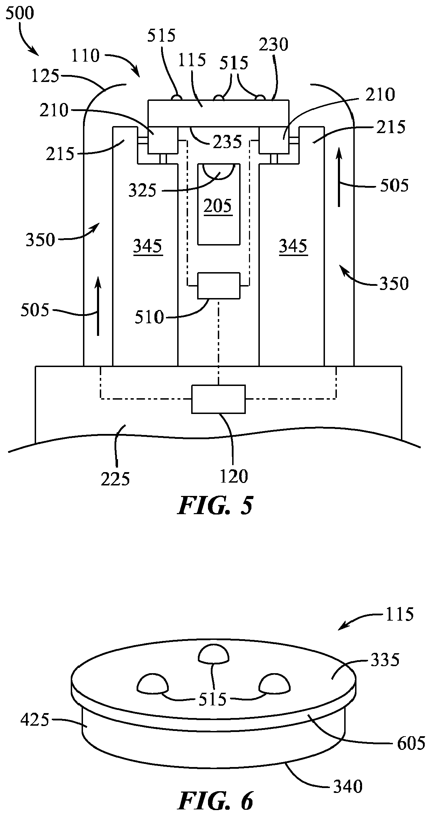

FIG. 5 illustrates an example of a debris clearing assembly 500 for the vehicle 100. The debris clearing assembly 500 can include the lens 115 defining the external surface 125 of the vehicle 100. For example, the lens 115 can at least partially define the external surface 125. The vehicle 100 can include the vehicle body 105 defining the external surface 125 and the internal volume 225 of the vehicle 100. For example, the vehicle body 105 and the lens 115 can each define a portion of the external surface 125. The debris clearing assembly 500 can include the sensor 205 disposed adjacent the lens 115. The sensor 205 can include the camera 325.

The debris clearing assembly 500 can include the air mover 120. The air mover 120 can be disposed in the internal volume 225 and configured to move air 505 across the lens 115 at the external surface 125. For example, the air mover 120 can push the air 505 out towards the external environment 145.

The debris clearing assembly 500 can include a controller 510. The controller 510 can be electrically coupled with or otherwise in electrical communication with the various components of the vehicle 100 and sensor assemblies described herein. The dotted lines connecting the controller 510 various other components indicate the electrical connection or communication. For example, the controller 510 can be electrically coupled to the sensor 205 and the air mover 120. For example, the controller 510 can be in wireless communication with the sensor 205 and the air mover 120. The air mover 120 can be fluidly coupled or fluidly in communication with the channels 350 defined by the housing 345 as indicated by the dotted lines connecting the air mover 120 to the channels 350. The controller 510 can initiate the operation of the various components of the vehicle 100 described herein. For example, the controller 510 can receive and process the input data or other information and then initiate the operation of the various components of the vehicle 100. For example, the controller 510 can be configured to receive the input data from the sensor 205. Then, the controller 510 can be configured to detect fluid 515 on the lens 115 in response to a signal received from the sensor 205 and activate the air mover 120 to move the air 505 to remove the fluid 515 from the lens 115. In this way, the controller 510 can initiate the operation of the air mover 120 to push the fluid 515 that accumulates, e.g., a water film and/or water droplets, away from a surface of the sensor 205, such as the outer surface 335 of the lens 115. The force from the air 505 can overcome the adhesion forces between the lens 115 and the fluid 515. With the force from the air 505 greater than the adhesion force, the fluid 515 can be cleared from the lens 115.

The debris clearing assembly 500 can include the vibration mechanism 210 mechanically connected to the lens 115. The controller 510 can be electrically coupled to the vibration mechanism 210. As such, the controller 510 can initiate the operation of the vibration mechanism 210. For example, the controller 510 can be configured to oscillate the lens 115 via the vibration mechanism 210 when the controller 510 detects the fluid 515 on the lens 115 via the sensor 205. The vibrations from the vibration mechanism 210 can reduce the adhesion between the lens 115 and the fluid 515 as well as reduce cohesive forces within the fluid 515 to break apart the fluid 515. With the reduction in adhesion and cohesion forces due to the moving are and vibrating motions, the debris and/or fluid can be cleared from the lens 115.

While vibration and the flow of air 505 over the lens 115 have shown to be effective in removing fluid 515 and debris independently of one another, in some examples, the combination of both the vibrations from the vibration mechanism 210 and the air 505 from the air mover 120 applied to the lens 115 can reduce the amount of time needed to clear fluid 515 and/or other debris from the lens 115 by 50% or more compared to only applying vibration or flowing air 505 alone. For example, the vibrations from the vibration mechanism 210 reduce the adhesion force between the lens 115 and the fluid 515 and the cohesive forces within the fluid 515 due at least in part to surface tension such that the force from the air 505 sufficient to overcome the tension force is less than if the tension force was not reduced by the vibration mechanism 210. As such, the velocity and the pressure of the air 505 sufficient to clear the fluid 515 is reduced, which means the air source can be slower and thus quieter. Additionally, the vibration mechanism 210 can vibrate at a lower frequency and amplitude with the air mover 120 moving the air 505 over the lens 115 than with the air mover 120 not operating, e.g., not moving air over the lens 115. With a lower frequency and amplitude of vibrations, the vibration mechanism 210 can be quieter. Reducing noise can reduce the discomfort experienced by an occupant of the vehicle 100.

Any of the features, components, and/or parts, including the arrangements and configurations thereof shown in FIG. 5 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 5.

FIG. 6 illustrates an example of the lens 115 for the vehicle 100. The lens 115 can include or define the outer surface 335, the internal surface 340, and the peripheral portion 425. For example, the lens 115 is depicted with the fluid 515 on the outer surface 335. The lens 115 can be flat, as depicted in FIG. 6. The lens 115 can be curved, as depicted in FIG. 3. The outer surface 335 and the internal surface 340 can be the same dimensions. For example, the outer surface 335 and the internal surface 340 can have the same diameter. Since the lens 115 can be any shape, the outer surface 335 and the internal surface 340 can be any shape. For example, the outer surface 335 and the internal surface 340 can squares with the same length. The outer surface 335 and the internal surface 340 can be the different dimensions. For example, the outer surface 335 can have a smaller or larger diameter than the diameter of the internal surface 340. Since the lens 115 can be any shape, the peripheral portion 425 can be curved, e.g., with the outer surface 335 and the internal surface 340 circular. The peripheral portion 425 can be flat and can include angles, e.g., with the outer surface 335 and the internal surface 340 being square.

The lens 115 can include a material 605. The material 605 can be integrated into the lens 115. The material 605 can be disposed on any surface of the lens 115. For example, the material 605 can be disposed on the outer surface 335, the internal surface 340, and/or the peripheral portion 425 of the lens 115. The material 605 can include properties otherwise not included in a material forming a bulk of the lens 115. For example, the material 605 can be a resistive heating material. In this example, the material 605 can be configured to de-ice the lens 115. In at least one example, the material can include heat conductive materials which can be heated to de-ice the lens 115. In at least one example, the material 650 can include a hydrophobic coating to reduce adhesive forces between fluid and other debris on the lens 115.

Any of the features, components, and/or parts, including the arrangements and configurations thereof shown in FIG. 6 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 6.

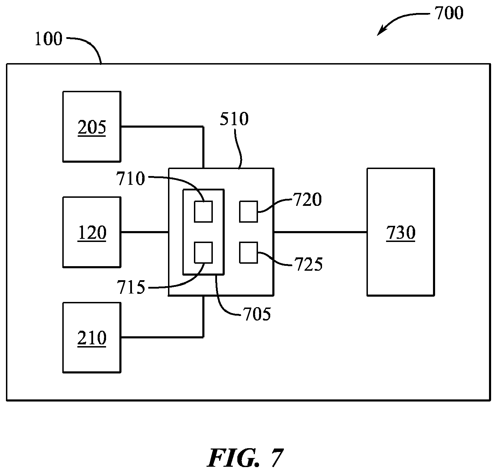

FIG. 7 illustrates a schematic view 700 of an example of the vehicle 100 including a controller 510. The controller 510 can be a vehicle controller 510. In at least one example, the controller 510 can include a housing mounted to a vehicle component such as a structural frame component. The structural frame component of the vehicle 100 can include a mounting frame to which the housing is secured. The controller 510 can include a computing module or assembly 705 having one or more processors 710 and a cooling mechanism 715. In at least one example, the cooling mechanism 715 is configured to cool the one or more processors 710. In at least one example, the cooling mechanism 715 can include a heat sink and/or a cooling plate through which a fluid can flow to convective cool the processors 710 or other cooling mechanism or system configured to manage or cool the temperature of the processors 710 during operation. In at least one example, the controller 510 can also include one or more memory components 720 and or one or more transmitter or receiver components, such as an antenna 725.

The vehicle 100 can also include other components or systems electrically connected to, communicating with, and/or controlled by the controller 510. For example, the controller 510 can be in communication with the vehicle sensor assembly 200 and/or components thereof, the visual sensor system 400 and/or components thereof, and/or the debris clearing assembly 500 and/or components thereof.

In at least one example, the controller 510 can also be electrically coupled to, or in communication with, the sensor 205 of the vehicle 100. The sensor 205 can be electrically coupled with the controller 510 such that the controller 510 can receive input data from the sensor 205, such as visual data regarding the vehicle 100 and/or the external environment 145 of the vehicle 100. The input data from the sensor 205 can be one of many inputs used by the controller 510, for example, by the one or more processors 710, to determine control outputs to other vehicle components, for example, the air mover 120.

In one example, the vehicle 100 can include the air mover 120 electrically coupled with or in communication with the controller 510 to send and receive inputs to and from the controller 510. In at least one example, the controller 510 can be coupled with components of the air mover 120, such as a fan, a blower, an air nozzle, or the like. The controller 510 can transmit control outputs, e.g., via the antenna 725, to the air mover 120 and/or the components thereof to push air, pull air, and/or recirculate air at a flow rate sufficient to remove debris and/or fluid on or otherwise in contact with the lens 115 of the sensor 205. For example, in response to input data received from the sensor 205, the one or more processors 710 can determine a control output to activate the air mover 120 and the antenna 725 can transmit the control output to the air mover 120.

In at least one example, the vehicle 100 can include the vibration mechanism 210 electrically coupled with or in communication with the controller 510 to send and receive inputs to and from the controller 510. The controller 510 can transmit control outputs, e.g., via the antenna 725, to the vibration mechanism 210 to induce vibrations and/or oscillations. The controller 510, e.g., the one or more processors 710, can determine the amplitude and frequency of the vibrations sufficient to remove debris and/or fluid on or otherwise in contact with the lens 115 of the sensor 205.

The controller 510 can activate the air mover 120 and the vibration mechanism 210 separately or together. For example, based on input data received by the sensor 205, the one or more processors 710 can determine the desired air flow rate of the air mover 120 to remove debris and/or fluid in contact with the lens 115, or separately the desired amplitude and frequency of the vibrations generated by the vibration mechanism 210 to remove debris and/or fluid in contact with the lens 115. In another example, based on input data received by the sensor 205, the one or more processors 710 can determine both the desired air flow rate of the air mover 120 as applied with the desired amplitude and frequency of the vibrations generated by the vibration mechanism 210 to remove debris and/or fluid on or otherwise in contact with the lens 115.

The vehicle 100 can also include one or more sensors 730. The one or more sensors 730 can be or can include an environmental sensor 730 that is similar to the sensor 205. For example, the environmental sensor 730 can receive input data regarding the vehicle 100 and/or the external environment 145 of the vehicle 100. The environmental sensor 730 can be a temperature and/or humidity sensor 730. For example, the environmental sensor 730 can receive temperature data and humidity data related to the vehicle 100 and/or the external environment 145 of the vehicle 100 as the input data. The environmental sensor 730 can output data and/or signals, e.g., to other components of the vehicle 100 such as the controller 510.

In at least one example, the controller 510 can also be electrically coupled to, or in communication with, the environmental sensor 730 of the vehicle 100. The environmental sensor 730 can be electrically coupled with the controller 510 such that the controller 510 can receive input data from the environmental sensor 730, such as temperature data related to the external environment 145 of the vehicle 100. The input data from the environmental sensor 730 can be one of many inputs used by the controller 510, for example, by the one or more processors 710, to determine control outputs to other vehicle components, for example, the air mover 120 and/or the vibration mechanism 210. For example, the controller 510 can receive input data, e.g., via the antenna 725, such as temperature and humidity levels of the lens 115 from the environmental sensor 730. Based on the input data from the environmental sensor 730, the controller 510 can determine, e.g., via the processors 710, a temperature sufficient to de-ice and/or de-fog the lens 115. Then, the controller 510 can activate, e.g., by transmitting a control output via the antenna 725, the air mover 120 to move air over the lens 115 at the determined temperature.

In these examples, the controller 510 can be electrically coupled with one or more other components and systems to operate the vehicle 100. As noted above, one example of the controller 510 can include a computing assembly 705 having one or more processors 710, and a cooling mechanism 715 for regulating and reducing the temperature of the processors 710. While the schematic view of FIG. 7 illustrates some components of the vehicle 100, the size and scale of the various components shown in FIG. 7 are not necessarily representative of actual sizes and scales of the various components and systems. However, the vehicle 100 can include many components and systems that must be disposed within, and secured to, the vehicle 100 such that they can be electrically coupled together and structurally sound to withstand wear and tear due to use and varying environmental conditions including varying weather conditions, operational vibrations, and bumpy roads, which can jostle the vehicle 100 and the components and systems thereof.

In an effort to maximize occupant cabin volume, the various components and systems illustrated in the vehicle 100 in FIG. 7, including the controller 510 and the computing assembly 705 thereof, are tightly packed together to minimize space there between. In addition, the various components and system of the vehicle 100 noted herein, as well as others not included in FIG. 7, are designed and manufactured to protect sensitive parts. Using the computing assembly 705 as an example, as the computing assembly 705 is installed and removed during manufacturing or repair, or as adjacent components and systems are installed or removed during manufacturing, assembly, or repair, critical components of the computing assembly 705 can be positioned such that they are less likely to be contacted. Some of these critical components can include the one or more processors 710 and the cooling mechanism 715, which may include fluid hoses, connectors, and seals, which must maintain tight tolerances and proper connections.

Any of the features, components, and/or parts, including the arrangements and configurations thereof shown in FIG. 7 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 7.

The term "about" herein is to be construed as +/- 10%, unless stated otherwise. Every range of values (of the form, "from about a to about b," or, equivalently, "from approximately a to b," or, equivalently, "from approximately a-b") disclosed herein is to be understood to set forth every number and range encompassed within the broader range of values.

According to some exemplary embodiments, the present system can receive and utilize user personal information or data to provide a customized user experience. In such instances, the collection, storage, use, and/or distribution of the user personal information should be conducted in accordance with recognized and respected procedures and protocols. Additionally, the present description uses specific wording to provide a thorough understanding of the systems and methods, but is not intended to be exhaustive or limiting. Rather, many modifications, combinations, and variations of the described elements can be made within the scope of the present teachings.

## Claims

1. A vehicle sensor assembly, comprising:
a lens disposed in an aperture defined by a body of a vehicle, the lens including an outer surface and an internal surface;
a sensor disposed in an internal volume of the vehicle defined by the body, the sensor disposed adjacent to the internal surface; and
a debris clearing assembly for removing debris from the outer surface, the debris clearing assembly comprising:
an air mover; and
a vibration mechanism mechanically coupled to the lens.

2. The vehicle sensor assembly of claim 1, wherein an orientation of the sensor defines a line of sight through the lens in a direction substantially aligned with an optical axis of the lens.

3. The vehicle sensor assembly of claim 2, wherein the vibration mechanism is configured to oscillate the lens in the direction.

4. The vehicle sensor assembly of claim 1, wherein:
the outer surface defines a portion of an external surface of the vehicle body; and
the air mover is disposed in the internal volume.

5. The vehicle sensor assembly of claim 4, wherein the air mover comprises a fan configured to move the air from the internal volume to the outer surface.

6. The vehicle sensor assembly of claim 5, further comprising a sensor housing defining a channel configured to direct the air moved by the fan.

7. The vehicle sensor assembly of claim 4, wherein the air mover comprises a vacuum pump configured to move the air from beyond the external surface, over the outer surface, and into the internal volume.

8. The vehicle sensor assembly of claim 1, wherein the vibration mechanism comprises an electromagnetic linear actuator or a rotary mass vibration motor.

9. The visual sensor system of claim 2, wherein the vibration mechanism is configured to oscillate the lens in a plane parallel to the optical axis.

10. The visual sensor system of claim 2, wherein the vibration mechanism is configured to oscillate the lens in a plane perpendicular to the optical axis.

11. The visual sensor system of claim 1, wherein the sensor further comprises a sensor housing including a sidewall;
wherein the lens is secured to the sidewall; and
wherein the vibration mechanism comprises a plurality of actuators disposed between the sidewall and the lens.

12. A debris clearing assembly for a vehicle sensor, comprising:
an air mover in fluid communication with an external surface of a lens, the lens at least partially defining an external surface of a vehicle; and
a controller electrically coupled to a sensor and the air mover, the sensor disposed adjacent the lens, the controller configured to detect fluid on the lens in response to a signal received from the sensor and activate the air mover to move the air to remove the fluid from the lens.

13. The debris clearing assembly of claim 12, further comprising a vibration mechanism mechanically connected to the lens.

14. The debris clearing assembly of claim 13, wherein:
the controller is electrically coupled to the vibration mechanism; and
the controller is configured to oscillate the lens via the vibration mechanism when the controller detects the fluid on the lens via the sensor.

15. The debris clearing assembly of claim 12, wherein:
the vehicle comprises a vehicle body defining the external surface and an internal volume; and
the air mover is disposed in the internal volume.
